# EUROPEAN PATENT SPECIFICATION

(11) **EP 3 065 205 B1**
(45) Date of publication and mention of the grant of the patent: **05.12.2018**
(21) Application number: 14857195.3
(22) Date of filing: 28.10.2014
(51) Int. Cl.: H01M 4/13, H01M 10/0525, H01M 2/06, H01M 2/26, H01M 10/0585, H01M 10/04, H01M 4/02

(54) **ELECTRODE AND CELL HAVING ELECTRODE**
ELEKTRODE UND ZELLE MIT ELEKTRODE
ÉLECTRODE ET CELLULE AYANT UNE ÉLECTRODE

(30) Priority: 30.10.2013 JP 2013225825
(43) Date of publication of application: 07.09.2016
(73) Proprietor: NISSAN MOTOR CO., LTD., Yokohama-shi, Kanagawa 220-8623 (JP)
(72) Inventor: FUJII, Takayuki, Atsugi-shi Kanagawa 243-0123 (JP)
(74) Representative: Grünecker Patent- und Rechtsanwälte PartG mbB
(86) International application number: PCT/JP2014/078657
(87) International publication number: WO 2015/064586

(56) References cited:
- EP-A2- 2 450 989
- WO-A2-02/101854
- JP-A- 2006 147 392
- JP-A- 2012 114 079
- JP-A- 2012 164 470
- JP-A- 2012 178 252
- JP-A- 2012 178 252
- US-A1- 2004 106 038

## Description

The present invention relates to a battery.

In recent years, there has been an increasing demand for automobile batteries and electronic equipment batteries in the automobile industry and the advanced electronics industry. In particular, reduction in the size and thickness and increase in the capacity are required. In particular, non-aqueous electrolyte secondary batteries, having a higher energy density than other batteries, are attracting attention.

A non-aqueous electrolyte secondary battery includes a negative electrode, including a current collector and a negative electrode active material layer applied to the current collector; a positive electrode, including a current collector and a positive electrode active material layer applied to the current collector; and a separator disposed between the negative electrode and the positive electrode. To prevent an internal short circuit between the negative electrode and the positive electrode in the battery, disposing an insulating cover (insulating member) on an end portion of the active material layer of the positive electrode has been proposed (Patent Literature 1 and 2).

The insulating member also functions to prevent an internal short circuit that may occur due to displacement of the positive electrode and the negative electrode when forming the battery by stacking the positive electrode, the separator, and the negative electrode.

### Citation List

### Patent Literature

Patent Literature 1: JP-2004-259625 A
Patent Literature 2: EP 2 450 989 A2

### Summary of Invention

### Problems to be solved by the invention

As shown in Patent Literature 1, such an insulating member is generally disposed from an active material layer of a current collector of an electrode to an exposed portion. This is in order to prevent an internal short circuit that may occur due to contact of a foreign matter that enters, during manufacturing, a very small gap that is formed at a boundary portion between the active material layer and the exposed portion even if the insulating member is disposed so as to cover only the exposed portion. In such a case, the thickness, in the stacking direction, of a part of the electrode from the active material layer on the current collector of the electrode to the exposed portion is increased by the thickness of the insulating member. Therefore, due to the thickness of the insulating member, pressure applied to the electrode becomes nonuniform. Accordingly, in the non-aqueous electrolyte secondary battery, an electrode reaction becomes nonuniform, and, as a result, a problem arises in that the cycle characteristics of the battery decrease.

An object of the present invention, which has been devised to solve the aforementioned problem of existing technologies, is to provide an electrode and a battery including the electrode. The electrode, including an insulating member disposed from an active material layer on a current collector of the electrode to an exposed portion, can reduce nonuniformity in pressure applied to the electrode irrespective of the thickness of the insulating member and can reduce nonuniformity in an electrode reaction.

### Means for solving problems

To achieve the object, a battery according to the present invention is a battery including a stacked body in which electrodes are stacked with a separator therebetween; and a casing that seals the stacked body. Each of the electrodes includes a current collector; and an active material layer that is stacked on the current collector so as to form an inclined portion while leaving an exposed portion at which a part of the current collector is exposed, the inclined portion being inclined in such a way that a thickness thereof decreases toward the exposed portion. The electrode includes an insulating member that covers a region from the exposed portion to the inclined portion. A sum of a thickness of an end portion of the active material layer covered by the insulating member and a stacking-direction-component of a thickness of the insulating member is less than or equal to a thickness of the active material layer that is not covered by the insulating member. A ratio of an area of the battery (projected area of the battery including the casing) to a rated capacity is 5 cm2/Ah or greater, and the rated capacity is 3 Ah or greater. An aspect ratio of the electrode, which is defined as a ratio of a long side to a short side of the rectangular active material layer, is in a range of 1 to 3.

With the electrode according to the present invention structured as described above, even when the insulting member is disposed on an end portion of the active material layer of the current collector, nonuniformity in pressure applied to the electrode can be reduced. Accordingly, the electrode according to the present invention can reduce nonuniformity in an electrode reaction, and, as a result, can improve the cycle characteristics.

### Brief Description of Drawings

[Fig. 1] Fig. 1 is a sectional view illustrating a structure of a battery including an electrode according to an embodiment.
[Fig. 2] Fig. 2 is a sectional view illustrating a structure of the electrode according to the embodiment.
[Fig. 3] Fig. 3 is a sectional view illustrating a structure of an electrode in which an insulating member extends beyond an end portion of a separator in an in-plane direction.
[Fig. 4] Fig. 4 is a sectional view illustrating a structure of an electrode in which an insulating member is disposed so as to exceed the thickness of an active material layer in the stacking direction.

### Description of Embodiments

Hereinafter, an embodiment of the present invention will be described with reference to the attached drawings. The sizes and proportions of members in the drawings may be exaggerated for convenience of illustration and may differ from actual sizes and proportions. In the present embodiment, an example in which an electrode 10 is a positive electrode 20 and an insulating member 50 is disposed on the positive electrode 20 is described. In the present embodiment, a battery 100, which includes the electrode 10 (the positive electrode 20) according to the present invention, is used, for example, as a secondary battery or a capacitor for a driving power source or an auxiliary power source of a motor or the of an electric automobile, a fuel cell automobile, or a hybrid electric automobile. In the present embodiment, an example in which the battery 100 is a non-aqueous electrolyte secondary battery is described.

### <Embodiment>

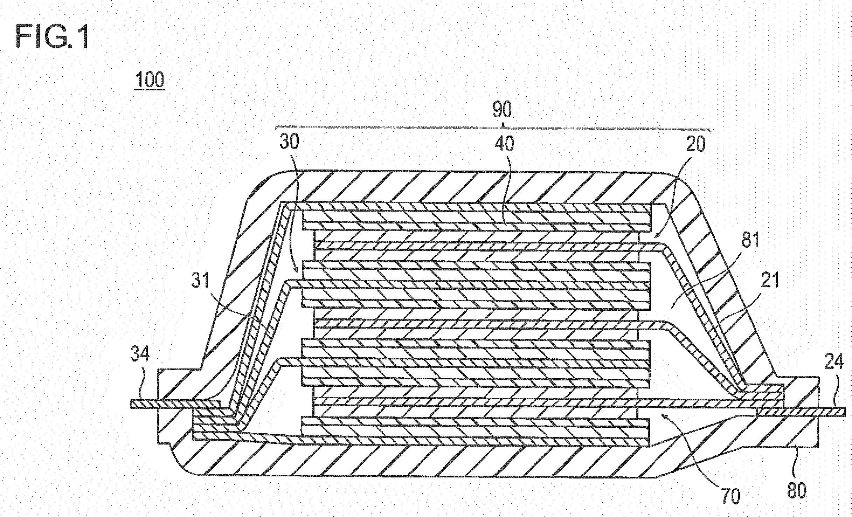

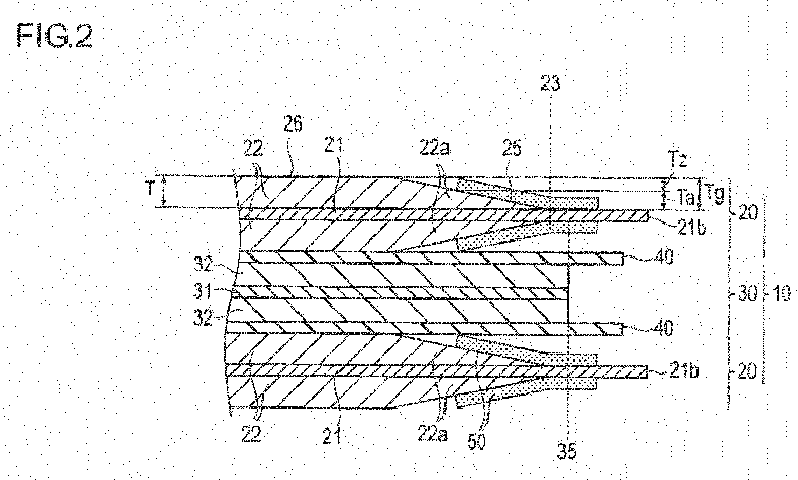

Referring to Figs. 1 and 2, the battery 100, which includes the electrode 10 (the positive electrode 20) according to the embodiment, will be described.

Fig. 1 is a sectional view illustrating the structure of the battery 100 including the electrode 10. Fig. 2 is a sectional view illustrating the structure of the electrode 10.

The battery 100 includes a power generation element (stacked body) 70 in which the electrodes 10 (the positive electrodes 20 and negative electrodes 30) are stacked with separators 40 therebetween, and a casing 80 that seals the power generation element 70.

In the battery 100, the power generation element 70, which is substantially rectangular and in which charge and discharge reactions occur, is sealed in a laminate sheet, which is the casing 80. The power generation element 70 has a structure in which the positive electrodes 20, the separators 40, and the negative electrodes 30 are stacked. The positive electrode 20, the separator 40, and the negative electrode 30 disposed adjacent to each other constitute a unit cell layer 90. The power generation element 70 has a structure in which a plurality of the unit cell layers 90 are stacked and electrically connected in parallel. The battery 100 may be structured so that the arrangement of the positive electrodes 20 and the negative electrodes 30 in the battery 100 shown in Fig. 1 is reversed and the positive electrodes 20 are disposed at both outermost layers of the power generation element 70.

The battery 100 has a flat rectangular shape, and a positive electrode tab 24 and a negative electrode tab 34, for outputting electric power, extend from two opposing ends thereof. By heat-fusing the periphery of the casing 80, the power generation element 70 is sealed in a state in which the positive electrode tab 24 and the negative electrode tab 34 extend to the outside.

The battery 100 may be made of known materials that are used for general non-aqueous electrolyte secondary batteries, and the materials are not particularly limited. A current collector 21 and an active material layer 22 of the positive electrode 20, a current collector 31 and an active material layer 32 of the negative electrode 30, the separator 40, the insulating member 50, the casing 80, and the like, which can be used for the battery 100, will be described.

The electrode 10 (the positive electrode 20 or the negative electrodes 30) includes the current collector 21 or 31, the active material layer 22 or 32, and the insulating member 50. The active material layer 22 is stacked on the current collector 21 so as to leave an exposed portion 21b, at which a part of the current collector 21 is exposed. The active material layer 22 is stacked so as to form an inclined portion 25 that is inclined in such a way that the thickness thereof decreases toward the exposed portion 21b. The active material layer 32 is stacked on the current collector 31 so that an end portion 35 coincides. Examples of a method for stacking the active material layer 22 or 32 include a method of applying an electrode slurry to the current collector 21 or 31 and drying the slurry; and a method of stacking an active material layer, which has been formed independently, on the current collector as described in Japanese Unexamined Patent Application Publication No. 2012-238469.

The insulating member 50 covers a boundary portion 23 between the active material layer 22 on the current collector 21 and the exposed portion 21b. The sum Tg of the thickness Ta of an end portion 22a of the active material layer 22 covered by the insulating member 50 and the stacking-direction-component Tz of the thickness of the insulating member 50 is less than or equal to the thickness T of the active material layer 22 that is not covered by the insulating member 50. With this structure, when forming the battery 100 by stacking the positive electrodes 20, the separators 40, and the negative electrodes 30, it is possible to prevent the height of the battery 100 in the stacking direction at end portions of the electrodes 10 in an in-plane direction from becoming greater than the height of portions other than the end portions. Accordingly, flexible layout of the battery 100 can be provided.

As illustrated in Fig. 2, in the present embodiment, an example in which the positive electrode 20 includes the insulating member 50 is described. Therefore, in the present embodiment, the current collector and the active material layer on which the insulating member 50 is disposed are the current collector 21 and the active material layer 22 for the positive electrode 20.

As the material of the current collector 21 of the positive electrode 20, materials that have been conventionally used for collectors of batteries can be used as appropriate. Examples of the material include aluminum, nickel, iron, stainless steel (SUS), titanium, and copper. In particular, in view of electron conductivity and battery operating voltage, preferably, the material of the current collector 21 of the positive electrode 20 is aluminum. However, the material is not particularly limited thereto. For example, an aluminum foil, a clad metal of nickel and aluminum, a clad metal of copper and aluminum, or a plating material that is a composite of these metals can be also used. The thickness of the current collector of the positive electrode is not particularly limited and is set in consideration of the intended use of the battery.

The material of the active material layer 22 of the positive electrode 20 is, for example, LiMn₂O₄. However, the material is not particularly limited thereto. In view of capacity and output power characteristics, preferably, a lithium-transition metal composite oxide is used. In the present embodiment, an example in which the positive electrode 20 has the active material layers 22 stacked on both surfaces of the current collector 21 is described.

The material of the current collector 31 of the negative electrode 30 is the same as the material of the current collector 21 of the positive electrode 20. In particular, in view of electron conductivity and battery operating voltage, preferably, the material of the current collector 31 of the negative electrode 30 is copper. As with the thickness of the current collector 21 of the positive electrode 20, the thickness of the current collector 31 of the negative electrode 30 is not particularly limited and is set in consideration of the intended use of the battery.

The material of the active material layer 32 of the negative electrode 30 is, for example, hard carbon (non-graphitizable carbon material) . However, the material is not particularly limited to this. For example, a graphite-based material or a lithium transition-metal oxide can be also used. In particular, a negative electrode active material that is made of carbon and a lithium transition-metal oxide is preferable in view of capacity and output power characteristics. In the present embodiment, an example in which the negative electrode 30 has the active material layers 32 stacked on both surfaces of the current collector 31 is described.

The active material layer 32, which is disposed on the current collector 31 of the negative electrode 30, extends beyond the active material layer 22, which is disposed on the current collector 21 of the positive electrode 20, in the extension direction, and faces the active material layer 22 with the separator 40 therebetween.

Although adjacent electrodes are basically separated by the separator, the electrodes may contact each other via a foreign matter, which has accidentally entered during manufacturing, and a short circuit may occur. Moreover, if displacement in an in-plane direction occurs due to vibration or the like, adjacent electrodes may contact each other and a short circuit may occur. Against such a situation, by disposing the insulating member at a position that overlaps a region formed by the active material layer of the negative electrode in plan view seen in a direction intersecting an in-plane direction, even if displacement occurs, the insulating member can exist between the adjacent electrodes and can prevent occurrence of a short circuit.

The separator 40 is porous and has air-permeability. The separator 40 is impregnated with an electrolyte and serves as an electrolyte layer. The material of the separator 40, which is an electrolyte layer, is, for example, air permeable porous PE (polyethylene) that can be impregnated with an electrolyte. However, the material is not particularly limited thereto. For example, another polyolefin such as PP (polypropylene), a laminate having three layers of PP/PE/PP, polyamide, polyimide, aramid, or non-woven fabric, can be also used. The non-woven fabric is, for example, formed of cotton, rayon, acetate, nylon, or polyester.

The host polymer of the electrolyte is, for example, PVDF-HFP (copolymer of polyvinylidene fluoride and hexafluoropropylene) containing HFP (hexafluoropropylene) copolymer by 10%. However, the material is not particularly limited thereto. Another polymer that does not have lithium-ion conductivity or a polymer that has ion conductivity (solid polymer electrolyte) can be also used. Examples of another polymer that does not have lithium-ion conductivity include PAN (polyacrylonitrile) and PMMA (polymethyl methacrylate). Examples of a polymer that has ion conductivity include PEO (polyethylene oxide) and PPO (polypropylene oxide).

An electrolyte solution held by the host polymer includes, for example, an organic solvent, which is composed of PC (propylene carbonate) and EC (ethylene carbonate), and a lithium salt (LiPF₆) as a supporting salt. The organic solvent is not particularly limited to PC and EC. Other cyclic carbonates; chain carbonates such as dimethyl carbonate; ethers, such as tetrahydrofuran, can be used. The lithium salt is not particularly limited to LiPF₆. Another inorganic acid anionic salt; or an organic acid anionic salt, such as LiCF₃SO₃, can be used.

The insulating member 50 prevents occurrence of an internal short circuit, which may occur if the positive electrode 20 and the negative electrode 30 are displaced from each other beyond the separator 40 and contact each other when forming the battery 100 by stacking the positive electrode 20, the separator 40, and the negative electrode 30. The insulating member 50 is disposed on a part of the exposed portion 21b of the current collector 21 of the positive electrode 20, the part facing the active material layer 32 of the negative electrode 30 with the separator 40 therebetween. The insulating member 50 covers a region from the exposed portion 21b to the inclined portion 25. That is, the insulating member 50 does not cover a flat portion 26 of the active material layer 22, which is disposed flatly. The insulating member 50 extends beyond the end portion 35 of the current collector 31 or the active material layer 32 of the negative electrode 30 in an in-plane direction. With this structure, occurrence of an internal short circuit can be appropriately prevented. As illustrated in Fig. 1, the positive electrode tab (tab) 24 is connected to an end portion of the current collector 21 of the positive electrode 20, and the insulating member 50 is disposed on the active material layer 22 at a side to which the positive electrode tab 24 is connected. In the present embodiment, an example in which the insulating members 50 are disposed at at least two sides of the boundary portion 23 of the rectangular current collector 21 of the positive electrode 20 is described, one of the sides being connected to the positive electrode tab 24 and the other side facing the one of the sides.

The material of the substrate of the insulating member 50 is a thermoplastic resin. Examples of the substrate of the insulating member 50 include polyethylene (PE), polypropylene (PP), polyvinyl chloride (PVC), polystyrene (PS), polyvinyl acetate (PVAc), polytetrafluoroethylene (PTFE), acrylonitrile butadiene styrene resin (ABS resin), acrylonitrile styrene resin (AS resin), acrylic resin (PMMA), polyamide (PA), polyacetal (POM), polycarbonate (PC), polyphenylene ether (PPE), polybutylene terephthalate (PBT), polyethylene terephthalate (PET), glass-fiber-reinforced polyethylene terephthalate (GF-PET), cyclic polyolephin (COP), polyphenylene sulfide (PPS), polysulfone (PSF), polyether sulfone (PES), amorphous polyarylate (PAR), liquid crystal polymer (LCP), polyetheretherketone (PEEK), thermoplastic polyimide (PI), and polyamide imide (PAI).

An adhesive (not shown) applied to the substrate of the insulating member 50 is not particularly limited. For example, either of an organic-solvent-based binder (non-aqueous binder) and a water dispersible binder (aqueous binder) can be used. Examples of the material include the following: polyethylene, polypropylene, polyethylene terephthalate, polyethernitrile, polyacrylonitrile, polyimide, polyamide, cellulose, carboxymethyl cellulose, ethylene-vinyl acetate copolymer, polyvinyl chloride, styrene-butadiene rubber, isoprene rubber, butadiene rubber, ethylene-propylene rubber, ethylene-propylene-diene copolymer, thermoplastic polymers such as styrene-butadiene-styrene-block copolymer and hydrogenated substances thereof, styrene-isoprene-styrene-block copolymer and hydrogenated substances thereof, polyvinylidene fluoride (PVDF), polytetrafluoroethylene, tetrafluoroethylene-hexafluoropropylene copolymer, tetrafluoroethylene-perfluoroalkyl vinyl ether copolymer, ethylene-tetrafluoroethylne copolymer, polychlorotrifluoroethylene, ethylene-chlorotrifluoroethylene copolymer, fluororesins such as polyvinyl fluoride, vinylidenefluoride-hexafluoropropylene-based fluorine-containing rubber, vinylidenefluoride-hexafluoropropylene-tetrafluoroethylene-based fluorine-containing rubber, vinylidene fluoride-based fluorine-containing rubber, and epoxy resin. Among these, polyvinylidene fluoride, polyimide, styrene-butadiene rubber, carboxymethyl cellulose, polypropylene, polytetrafluoroethylene, polyacrylonitrile, or polyamide is more preferable. Such appropriate binders have excellent heat resistance, low reactivity with an electrolyte solution, and excellent solvent resistance, and can be used by being applied to the active material layer of each of the positive electrode and the negative electrode. These binders may be used solely or two or more of the binders may be used together.

In the present embodiment, an example in which an adhesive tape is used as the insulating member 50 is described. The adhesive tape has an adhesive that has been applied to the entirety of one surface thereof that contacts the active material layer 22 of the positive electrode 20. However, the adhesive tape is not limited to this. For example, a tape that does not have an adhesive applied thereto can be also used as the substrate of the insulating member 50. In this case, an adhesive surface is formed by applying an adhesive to the entirety of one surface of the substrate of the insulating member 50, which is made from a tape, the one surface contacting the active material layer 22 of the positive electrode 20. Also with this structure, the insulating member 50, which has an adhesive surface on the entirety of one surface thereof that contacts the active material layer 22 of the positive electrode 20, is formed.

As illustrated in Fig. 2, the sum Tg of the thickness Ta of the end portion 22a of the active material layer 22 covered by the insulating member 50 and the stacking-direction-component Tz of the thickness of the insulating member 50 is less than or equal to the thickness T of the active material layer 22 that is not covered by the insulating member 50. Therefore, even when the insulating member 50 is disposed on the end portion 22a of the active material layer 22 on the current collector 21 of the positive electrode 20, pressure applied to the positive electrode 20 and the negative electrode 30 becomes uniform. Accordingly, electrical reactions that occur in the positive electrode 20 and the negative electrode 30 become uniform.

As described above, the active material layer 22 of the positive electrode 20 includes the inclined portion 25, which is a part of the active material layer 22 that is covered by the insulating member 50 and that is inclined toward the outer periphery. Therefore, the end portion 22a of the active material layer 22 of the positive electrode 20 does not have a bulge that sticks out in the stacking direction. Accordingly, as compared with a case where the end portion of the active material layer has a bulge that sticks out in the stacking direction, the electrode 10 according to the present invention, which does not have such a bulge at the end portion, can appropriately prevent a short circuit that might be caused by such a bulge.

The internal volume of the casing 80 is greater than the volume of the power generation element 70, so that the power generation element 70 can be enclosed in the casing 80. The internal volume of the casing 80 is the volume of the casing 80 after the casing 80 is sealed and before the casing 80 is vacuumed. The volume of the power generation element 70 is the volume of a space occupied by the power generation element 70, including a void inside the power generation element 70. Because the internal volume of the casing 80 is greater than the volume of the power generation element 70, a space that can store a gas when the gas is generated exists. Thus, the gas can be smoothly discharged from the power generation element 70, so that the generated gas is not likely to affect the operation of the battery and the battery characteristics are improved.

In the present embodiment, preferably, the ratio (L/V₁) of the volume L of electrolyte solution injected into the casing 80 to the volume V₁ of the void in the power generation element 70 is in the range of 1.2 to 1.6. When the amount of electrolyte solution (volume L) is large, even if the electrolyte solution mainly exists on the positive electrode 20 side, a sufficient amount of electrolyte solution exists also on the negative electrode 30 side, which is advantageous in view of uniformly forming surface coatings on both electrodes. On the other hand, when the amount of electrolyte solution (volume L) is large, the cost of electrolyte solution is increased. And an excess amount of electrolyte solution leads to an increase in the distance between the electrodes so that the battery resistance is increased. Thus, it is desirable that the ratio of the liquid-absorbing speed of the active material layer 22 of the positive electrode 20 and the liquid-absorbing speed of the active material layer 32 of the negative electrode 30 be in an appropriate range (Tc/Ta = 0.6 to 1.3) and that the amount of electrolyte solution (to be specific, the ratio (L/V₁) of the volume L of the electrolyte solution to the volume V₁ of a void in the power generation element 70) be appropriate. This is advantageous in satisfying requirements for formation of a uniform coating, cost, and cell resistance. In view of these, the value of the ratio (L/V₁) is preferably in the range of 1.2 to 1.6, more preferably in the range of 1.25 to 1.55, and particularly preferably in the range of 1.3 to 1.5.

In the present embodiment, preferably, the ratio of (V₂/V₁) the volume V₂ of an extra space 81 in the casing 80 to the volume V₁ of a void in the power generation element 70 is in the range of 0.5 to 1.0. Moreover, preferably, the ratio (L/V₂) of the volume L of electrolyte solution injected into the casing 80 to the volume V₂ of the extra space 81 in the casing 80 is in the range of 0.4 to 0.7. Thus, a part of the electrolyte solution that is injected into the casing 80 and that is not absorbed by the binder is allowed to exist in the extra space 81 without fail. Moreover, movement of lithium ions in the battery 100 can be guaranteed. As a result, occurrence of a non-uniform reaction due to an increase of the distance between electrodes is prevented. Such a non-uniform reaction is caused by the existence of excessive electrolyte solution and is problematic when a large amount of electrolyte solution is used as in a case where a solvent-based binder such as PVdF is used. Therefore, a non-aqueous electrolyte secondary battery having good long-term cycle characteristics (life characteristics) can be provided.

Here, "the volume (V₁) of the void in the power generation element 70" can be calculated by adding up the volumes of voids in the positive electrode 20, the negative electrode 30, and the separator 40. That is, the volume (V₁) can be calculated as the sum of the volumes of voids in the components of the power generation element 70. The battery 100 is usually made by enclosing the power generation element 70 in the casing 80, injecting the electrolyte solution into the casing 80, and vacuuming the inside of the casing 80. When a gas is generated in the casing 80 in this state, if there is a space for storing the generated gas in the casing 80, the casing 80 expands due to the generated gas stored in the space. In the present specification, such a space is defined as the "extra space 81", and the volume of the extra space when the casing expands to the maximum without bursting is defined as the volume V₂. As described above, the value of V₂/V₁ is preferably in the range of 0.5 to 1.0, more preferably in the range of 0.6 to 0.9, and particularly preferably in the range of 0.7 to 0.8.

As described above, in the present invention, the ratio of the volume of the electrolyte solution injected and the volume of the extra space 81 is controlled to be in a predetermined range. To be specific, it is desirable that the ratio (L/V₂) of the volume (L) of the electrolyte solution injected into the casing 80 to the volume V₂ of the extra space 81 in the casing 80 be controlled in the range of 0.4 to 0.7. More preferably, the value of L/V₂ is in the range of 0.45 to 0.65, and particularly preferably in the range of 0.5 to 0.6.

In the present embodiment, preferably, the extra space 81 in the casing 80 is at least disposed vertically above the power generation element 70. With such a structure, the generated gas can be stored in a vertically-upper part of the power generation element 70, in which the extra space 81 exists. Thus, as compared with a case where the extra space 81 exists in a side part or a lower part of the power generation element 70, the electrolyte solution can mainly exist in a lower part of the casing 80 in which the power generation element 70 exists. As a result, the power generation element 70 can be constantly and reliably immersed in a larger amount of electrolyte solution, and decrease of battery performance due to shortage of electrolyte solution can be minimized. A specific structure for allowing the extra space 81 to be disposed vertically above the power generation element 70 is not particularly limited. For example, the material and shape of the casing 80 itself may be determined so that the casing 80 may not bulge toward a side part or a lower part of the power generation element 70, or a member for preventing the casing 80 from bulging toward the side part or the lower part thereof may be disposed outside the casing 80.

In recent years, large batteries are required for use in automobiles and the like. The battery 100 including the electrode 10 according to the present invention is particularly advantageous in a case where the battery 100 is a large-area battery in which the active material layer 22 of the positive electrode 20 and the active material layer 32 of the negative electrode 30 both have large areas. That is, in the case where the battery 100 is a large-area battery, the battery 100 is advantageous in that cohesive failure from an electrode surface due to friction between the electrode 10 (the positive electrode 20 or the negative electrode 30) and the separator 40 can be further suppressed, and the battery characteristics can be maintained even if vibration is applied. Accordingly, in the present embodiment, preferably, the battery assembly, including the power generation element 70 and the casing 80 covering the power generation element 70, is large, because the present embodiment is more advantageous in this case. To be specific, preferably, the active material layer of the electrode 10 (the positive electrode 20 or the negative electrode 30) is shaped like a rectangle, and the length of a short side of the rectangle is 100 mm or greater. Such a large battery can be used for an automobile. Here, the length of the short side of the active material layer 32 of the negative electrode 30 refers to the length of the shortest one of the sides of each electrode. The upper limit of the length of the short side of the battery assembly is not particularly limited. Usually, the length is 250 mm or less.

Apart from the physical size of the electrode 10 (the positive electrode 20 or the negative electrode 30), upsizing of the battery can be defined in terms of the relationship between the area and the capacity of the battery. According to the invention, the ratio of the area of the battery (the projected area of the battery including the casing) to the rated capacity is 5 cm²/Ah or greater, and the rated capacity is 3 Ah or greater. In a battery, as the battery area per unit capacity becomes large, it becomes difficult to remove a gas generated between the electrodes. When the gas is generated, in particular, if there is a gas-accumulating portion between large electrodes, a nonuniform reaction is likely to develop from the portion. Therefore, a problem of decrease of the battery performance (in particular, life characteristics after a long cycle) of a large battery in which an aqueous binder such as SBR is used to form the active material layer of the negative electrode is more likely to arise. Accordingly, preferably, a non-aqueous electrolyte secondary battery according to the present embodiment is large in the respect that the advantages of the present invention are more significant. Moreover, the aspect ratio of the rectangular electrode is in the range of 1 to 3, and preferably in the range of 1 to 2. The aspect ratio of the electrode is defined as the ratio of a long side to a short side of the rectangular active material layer of the positive electrode. When the aspect ratio is in such a range, the gas can be discharged uniformly in an in-plane injected into a test battery, the test battery is let stand for about 10 hours, and an initial charge is performed. Subsequently, at a temperature of 25°C and in a voltage range of 3.0 V to 4.15 V, the rated capacity is measured through the following steps 1 to 5.

Step 1: A constant-current charge of 0.2 C is performed so that the voltage reaches 4.15 V, and then a 5-minute break is taken.

Step 2: After step 1, a constant-voltage charge is performed for 1.5 hours, and then a 5-minute break is taken.

Step 3: A constant-current discharge of 0.2 C is performed so that the voltage reaches 3.0 V, a constant-voltage discharge is performed for 2 hours, and a 10-second break is taken.

Step 4: A constant-current charge of 0.2 C is performed so that the voltage reaches 4.1 V, a constant-voltage charge is performed for 2.5 hours, and then a 10-second break is taken.

Step 5: A constant-current discharge of 0.2 C is performed so that the voltage reaches 3.0 V, a constant-voltage discharge is performed for 2 hours, and then a 10-second break is taken.

Rated capacity: The rated capacity is the discharge capacity (CCCV discharge capacity) from the constant-current discharge to the constant-voltage discharge in Step 5.

The electrode 10 according to the first embodiment described above has the following advantages.

The electrode 10 (the positive electrode 20) includes the current collector 21, the active material layer 22, and the insulating member 50. The active material layer 22 is stacked on the current collector 21 so as to form the inclined portions 25 while leaving the exposed portion 21b at which a part of the current collector 21 is exposed, the inclined portion 25 being inclined in such a way that a thickness thereof decreases toward the exposed portion 21b. The insulating member 50 covers the region from the exposed portion 21b to the inclined portion 25.

With the electrode 10 having such a structure, even though the insulating member 50 is disposed on the end portion 22a of the active material layer 22 on the current collector 21, nonuniformity in the pressure applied to the electrode 10 (the positive electrode 20 or the negative electrode 30) can be reduced. Accordingly, the electrode 10 (the positive electrode 20) according to the present invention can reduce nonuniformity in electrode reactions, and, as a result, can improve the cycle characteristics.

Moreover, the sum Tg of the thickness Ta of the end portion 22a of the active material layer 22 covered by the insulating member 50 and the stacking-direction-component Tz of the thickness of the insulating member 50 is less than or equal to the thickness T of the active material layer 22 that is not covered by the insulating member 50.

With the electrode 10 having such a structure, when disposing the insulating member 50 from the active material layer 22 on the current collector 21 to the exposed portion 21b of the electrode 10 (the positive electrode 20), the sum Tg of the thickness Ta of the end portion 22a of the active material layer 22 covered by the insulating member 50 and the stacking-direction-component Tz of the thickness of the insulating member 50 is made less than or equal to the thickness T of the active material layer 22 that is not covered by the insulating member 50. Therefore, even though the insulating member 50 is disposed on the end portion 22a of the active material layer 22 on the current collector 21, the electrode 10 (the positive electrode 20) according to the present invention can make pressure applied to the electrode 10 (the positive electrode 20 or the negative electrode 30) be uniform. Accordingly, the electrode 10 (the positive electrode 20 or the negative electrode 30) according to the present invention can cause electrode reactions uniformly, and, as a result, can improve the cycle characteristics. Moreover, when forming the battery 100 by stacking the positive electrodes 20, the separators 40, and the negative electrodes 30, it is possible to prevent the height of the battery 100 in the stacking direction at end portions of the electrodes 10 in an in-plane direction from becoming greater than the height of portions other than the end portions. Accordingly, flexible layout of the battery 100 can be provided.

Moreover, the insulating member 50 extends beyond the end portion 35 of the current collector 31 or the active material layer 32 of the negative electrode 30 in an in-plane direction.

With the electrode 10 (the positive electrode 20) having such a structure, occurrence of the internal short circuit can be appropriately prevented.

Moreover, in the electrode 10 (the positive electrode 20), the positive electrode tab (tab) 24 is connected an end portion of the current collector 21, and the insulating member 50 is disposed on the active material layer 22 at a side to which the positive electrode tab 24 is connected.

With the electrode 10 (the positive electrode 20) having such a structure, because the insulating member 50 is disposed on the end portion 22a of the active material layer 22 at the side to which the positive electrode tab 24 is connected, nonuniformity in the pressure applied to a part of the active material layer 22 near the positive electrode tab 24 can be reduced. Therefore, the electrode 10 (the positive electrode 20) according to the present invention can reduce nonuniformity in an electrode reaction in the part of the active material layer 22 of the positive electrode 20 near the positive electrode tab 24 and allows an electric current to smoothly flow to the positive electrode tab 24. Accordingly, the electrode 10 (the positive electrode 20) according to the present invention can improve the cycle characteristics.

Moreover, the current collector and the active material layer of the electrode 10 are for the positive electrode 20.

As illustrated in Fig. 2, in the present embodiment, the insulating member 50 is included in the positive electrode 20. Therefore, in the present embodiment, the current collector and the active material layer on which the insulating member 50 is disposed are the current collector 21 and the active material layer 22 for the positive electrode 20. Thus, when the battery 100 is formed by stacking the positive electrode 20, the separator 40, and the negative electrode 30, the insulating member 50 included in the positive electrode 20 can reduce nonuniformity in the pressure applied to the positive electrode 20 and the negative electrode 30 and can reduce nonuniformity in electrode reactions. Accordingly, with the battery 100, the cycle characteristics can be improved.

Moreover, in the electrode 10, the insulating member 50 is disposed at a position that overlaps a region formed by the active material layer 32 of the negative electrode 30 in plan view.

Although adjacent electrodes (the positive electrode 20 and the negative electrode 30) are basically separated by the separator 40, the electrodes may contact each other if displacement in an in-plane direction occurs due to vibration or the like, and a short circuit may occur. In the present embodiment, against such a situation, the insulating member 50 is disposed at the position that overlaps the region formed by the active material layers 32 of the negative electrode 30 in plan view seen in a direction intersecting the in-plane direction. With the electrode 10 having such a structure, because the insulating member is disposed at the position described above, even if displacement occurs, the insulating member 50 can exist between the adjacent electrodes, and occurrence of the short circuit can be prevented.

Moreover, the battery 100 includes the stacked body (the power generation element 70), in which the electrodes 10 (the positive electrodes 20 and the negative electrodes 30) are stacked with the separators 40 therebetween; and the casing 80, which seals stacked body.

With the battery 100 having such a structure, because the electrode 10 (the positive electrode 20) is enclosed in the casing 80, even though the insulating member 50 is disposed on the end portion 22a of the active material layer 22 on the current collector 21, nonuniformity in the pressure applied to the electrode 10 (the positive electrode 20 or the negative electrode 30) can be reduced. Accordingly, the battery 100 can reduce nonuniformity in the electrode reaction, and, as a result, can improve the cycle characteristics.

Moreover, in the battery 100, the active material layers 22 and 32 are each shaped like a rectangle, and the length of a short side of the rectangle is 100 mm or greater.

With the battery 100 having such a structure, the active material layer 22 of the positive electrode 20 and the active material layer 32 of the negative electrode 30 are each shaped like a rectangle having a short side whose length is 100 mm or greater. Thus, because the battery 100 is a large battery, cohesive failure from an electrode surface due to friction between the electrode 10 (the positive electrode 20) and the separator 40 can be further suppressed, and the battery characteristics can be maintained even if vibration is applied to the battery.

Moreover, in the battery 100, the ratio of the area of the battery (the projected area of the battery 100 including the casing 80) to the rated capacity is 5 cm²/Ah or greater, and the rated capacity is 3 Ah or greater.

With the battery 100 having such a structure, apart from the physical size of the electrode 10, upsizing of the battery 100 can be defined in terms of the relationship of the battery area and the battery capacity.

Moreover, in the electrode 10, the aspect ratio of the electrode 10, which is defined as the ratio of a long side to a short side of the active material layer 22 of the rectangular positive electrode 20, is in the range of 1 to 3.

With the electrode 10 having such a structure, by setting the aspect ratio to be in such a range, a gas can be discharged uniformly in an in-plane direction.

### EXAMPLES

Hereinafter, the present invention will be described in further detail by using EXAMPLES. Note that the present invention is not limited only to these.

First, a method of forming the positive electrode 20 will be described. The current collector 21 of the positive electrode 20 is an Al foil having a thickness of 20 µm. The active material layer 22 (positive electrode slurry) of the positive electrode 20 is made by dispersing lithium nickel oxide powder (active material), PVdF (polyvinylidene fluoride, binder), carbon powder (conductive assistant) with a ratio of 90:5:5 (weight ratio) in NMP (N-methylpyrrolidone). Subsequently, the positive electrode slurry is applied to both surfaces of the Al foil having a thickness of 20µm by using a die coater, dried, and then pressed. Thus, the positive electrode 20, having a thickness of 150 µm except for the end portion 22a of the active material layer 22, is formed.

Next, a method of forming the negative electrode 30 will be described. The current collector 31 of the negative electrode 30 is a Cu foil having a thickness of 10 µm. The active material layer 32 (negative electrode slurry) of the negative electrode 30 is made by dispersing Gr powder (active material) and PVdF (polyvinylidene fluoride, binder) with a ratio of 95:5 (weight ratio) in NMP (N-methylpyrrolidone). Subsequently, the negative electrode slurry is applied to both surfaces of the Cu foil having a thickness of 10 µm by using a die coater, dried, and then pressed. Thus, the negative electrode 30, having a thickness of 140 µm, is formed.

Next, a method of forming the battery 100 will be described. As the insulating member 50, a polypropylene tape having a width of 12 mm and a thickness of 30 µm is used so as to cover the boundary between the active material layer 22 on the current collector 21 of the positive electrode 20 and the exposed portion 21b. A method of affixing the tape and the covering length are shown in results 1-*. As the separator 40, porous polyethylene film (thickness = 25 µm) was prepared. As the electrolyte solution, 1M LiPF₆ EC:DEC = 1:1 (volume ratio) was used. Ten positive electrodes 20 and eleven negative electrodes 30, each of which had been made as described above, and twenty separators 40 were prepared; and the battery was made by stacking the negative electrode 30/the separator 40/the positive electrode 20/the separator 40/the negative electrode 30 ... in this order. The power generation element 70, which had been obtained, was placed in an aluminum laminate sheet bag having a thickness of 150 µm, which was the casing 80, and the electrolyte solution was injected. Under a vacuum condition, an opening portion of the aluminum laminate sheet bag was sealed while allowing the positive electrode tab 24 and the negative electrode tab 34, which were connected to the positive electrode 20 and the negative electrode 30, to extend to the outside. Thus, the test cell was completed.

Next, a method of evaluating the battery 100 will be described. The battery 100, which had been formed, was clamped between SUS plates having a thickness of 5 mm so that a pressure of 100 g/cm² was applied to the battery, and 0.2C/4.2V_CC/CV charge was performed for seven hours at 25°C. Next, a 10-minute break was taken, and then discharge was performed to 2.5V with 0.2C_CC discharge. Subsequently, in 55°C atmosphere, a cycle of 1C/4.2V_CC/CV charge (0.015 C cut) and 1C_CC discharge (2.5 V voltage cut) was repeated (cycle test), and the ratio of the discharge capacity in the 300-th cycle to the discharge capacity in the first cycle was calculated as the cycle capacity retention ratio.

Hereinafter, EXAMPLES 1 to 3 according to the present invention will be described.

### <EXAMPLE 1>

Only a part of the end portion 22a of the active material layer 22 of the positive electrode 20 from a position 4 mm inward from the outer peripheral end to the outer peripheral end was formed so as to be inclined. The active material layer 22 was applied to the current collector 21 so that the thickness Ta of the end portion 22a of the active material layer 22 of the positive electrode 20 at a position of 2.5 mm from the outer peripheral end was 140 µm or less. The sum Tg of the thickness Ta of the end portion 22a of the active material layer 22 covered by the insulating member 50 and the stacking-direction-component Tz of the thickness of the insulating member 50 was 150 µm at the maximum (thickness the same as the thickness T of the active material layer 22 that was not covered by the insulating member 50). The active material layer 22 of the positive electrode 20 was formed in a square shape having a size of 190 mm × 190 mm. Thus, the positive electrode 20 had an aspect ratio of 1:1. The active material layer 32 of the negative electrode 30 was formed in a square shape having a size of 200 mm × 200 mm. The power generation element 70 was formed by using the positive electrode 20 and the negative electrode 30 having such sizes, and the cycle test was performed. As a result, the cycle capacity retention ratio was 82%.

### <EXAMPLE 2>

Only a part of the end portion 22a of the active material layer 22 of the positive electrode 20 from a position 4 mm inward from the outer peripheral end to the outer peripheral end was formed so as to be inclined. The active material layer 22 was applied to the current collector 21 so that the thickness Ta of the end portion 22a of the active material layer 22 of the positive electrode 20 at a position of 2.5 mm from the outer peripheral end was 130 µm or less. The sum Tg of the thickness Ta of the end portion 22a of the active material layer 22 covered by the insulating member 50 and the stacking-direction-component Tz of the thickness of the insulating member 50 was 140 µm at the maximum (thickness less than the thickness T of the active material layer 22 that was not covered by the insulating member 50). The active material layer 22 of the positive electrode 20 was formed in a square shape having a size of 190 mm × 190 mm. Thus, the positive electrode 20 had an aspect ratio of 1:1. The active material layer 32 of the negative electrode 30 was formed in a square shape having a size of 200 mm × 200 mm. The power generation element 70 was formed by using the positive electrode 20 and the negative electrode 30 having such sizes, and the cycle test was performed. As a result, the cycle capacity retention ratio was 82%.

### <EXAMPLE 3>

Only a part of the end portion 22a of the active material layer 22 of the positive electrode 20 from a position 4 mm inward from the outer peripheral end to the outer peripheral end was formed so as to be inclined. The active material layer 22 was applied to the current collector 21 so that the thickness Ta of the end portion 22a of the active material layer 22 of the positive electrode 20 at a position of 2.5 mm from the outer peripheral end was 140 µm or less. The sum Tg of the thickness Ta of the end portion 22a of the active material layer 22 covered by the insulating member 50 and the stacking-direction-component Tz of the thickness of the insulating member 50 was 150 µm at the maximum (thickness the same as the thickness T of the active material layer 22 that was not covered by the insulating member 50). The active material layer 22 of the positive electrode 20 was formed in a rectangular shape having a size of 190 mm × 570 mm. Thus, the positive electrode 20 had an aspect ratio of 1:3. The active material layer 32 of the negative electrode 30 was formed in a rectangular shape having a size of 200 mm × 580 mm. The power generation element 70 was formed by using the positive electrode 20 and the negative electrode 30 having such sizes, and the cycle test was performed. As a result, the cycle capacity retention ratio was 81%.

Hereinafter, Comparative Examples 1 to 3, which are compared with EXAMPLES 1 to 3, will be described.

### <Comparative Example 1>

An active material layer was applied to the current collector so that the thickness of an end portion of the active material layer of the positive electrode was 150 µm, which was the same as the thickness of the active material layer that was not covered by the insulating member. The sum of the thickness of the end portion of the active material layer covered by the insulating member and the stacking-direction-component of the thickness of the insulating member was 160 µm at the maximum (thickness greater than the thickness of the active material layer that was not covered by the insulating member). The active material layer of the positive electrode was formed in a square shape having a size of 190 mm × 190 mm. Thus, the positive electrode had an aspect ratio of 1:1. An active material layer of the negative electrode was formed in a square shape having a size of 200 mm × 200 mm. A power generation element was formed by using the positive electrode and the negative electrode having such sizes, and the cycle test was performed. As a result, the cycle capacity retention ratio was 76%.

### <Comparative Example 2>

Only a part of an end portion of an active material layer of the positive electrode from a position 4 mm inward from the outer peripheral end to the outer peripheral end was formed so as to be inclined. The active material layer was applied to the current collector so that the thickness of the end portion of the active material layer of the positive electrode at a position of 2.5 mm from the outer peripheral end was 145 µm or less. The sum of the thickness of the end portion of the active material layer covered by the insulating member and the stacking-direction-component of the thickness of the insulating member was 155 µm at the maximum (thickness greater than the thickness of the active material layer that was not covered by the insulating member) . An active material layer of the positive electrode was formed in a square shape having a size of 190 mm × 190 mm. Thus, the positive electrode had an aspect ratio of 1:1. The active material layer of the negative electrode was formed in a square shape having a size of 200 mm × 200 mm. A power generation element was formed by using the positive electrode and the negative electrode having such sizes, and the cycle test was performed. As a result, the cycle capacity retention ratio was 79%.

### <Comparative Example 3>

Only a part of an end portion of an active material layer of the positive electrode from a position 4 mm inward from the outer peripheral end to the outer peripheral end was formed so as to be inclined. The active material layer was applied to the current collector so that the thickness of the end portion of the active material layer of the positive electrode at a position of 2.5 mm from the outer peripheral end was 140 µm or less. The sum of the thickness of the end portion of the active material layer covered by the insulating member and the stacking-direction-component of the thickness of the insulating member was 150 µm at the maximum (thickness the same as the thickness of the active material layer that was not covered by the insulating member) . An active material layer of the positive electrode was formed in a rectangular shape having a size of 190 mm × 760 mm. Thus, the positive electrode had an aspect ratio of 1:4. An active material layer of the negative electrode was formed in a rectangular shape having a size of 200 mm × 770 mm. A power generation element was formed by using the positive electrode and the negative electrode having such sizes, and the cycle test was performed. As a result, the cycle capacity retention ratio was 78%.

Table 1 shows the results of testing the cycle capacity retention ratio of the EXAMPLES 1 to 3 and the Comparative Examples 1 to 3.

**[Table 1]**

| | Maximum Thickness Tg (µm) of Part Covered by Insulating Member | Aspect Ratio of Positive Electrode | Cycle Capacity Retention Ratio (%) |
|---|---|---|---|
| EXAMPLE 1 | 150 | 1:1 | 82 |
| EXAMPLE 2 | 140 | 1:1 | 82 |
| EXAMPLE 3 | 150 | 1:3 | 81 |
| Comparative Example 1 | 160 | 1:1 | 76 |
| Comparative Example 2 | 155 | 1:1 | 79 |
| Comparative Example 3 | 150 | 1:4 | 78 |

### <Comparison Result>

In EXAMPLES 1 to 3, the cycle capacity retention ratio was improved as compared with Comparative Examples 1 to 3. This is because the sum of Tg of the thickness Ta of the end portion 22a of the active material layer 22 covered by the insulating member 50 and the stacking-direction-component Tz of the thickness of the insulating member 50 is less than the thickness T of the active material layer 22 that is not covered by the insulating member 50 and because the aspect ratio of the positive electrode 20 is in the range of 1 to 3. It is considered that, with such a structure, in EXAMPLES 1 to 3, even though the insulating member is disposed on the end portion of the active material layer of the current collector, pressure applied to the electrode could be made uniform and the electrode reaction could be made uniform. It is considered that, by setting the aspect ratio of the positive electrode 20 to be in such a range, a gas could be discharged uniformly in an in-plane direction. It is considered that the cycle capacity retention ratio (cycle characteristics) improved as a result of these.

In the present example, the power generation element 70 is formed by alternately stacking the positive electrode 20, the separator 40, and the negative electrode 30. However, the structure of the power generation element 70 is not limited to this. It has been confirmed that a power generation element 70 in which the positive electrode 20 and the negative electrode 30 are wound with the separator 40 therebetween has the same advantages.

In addition, the present invention may be modified in various ways on the basis of structures described in the claims and such modifications are within the scope of the present invention.

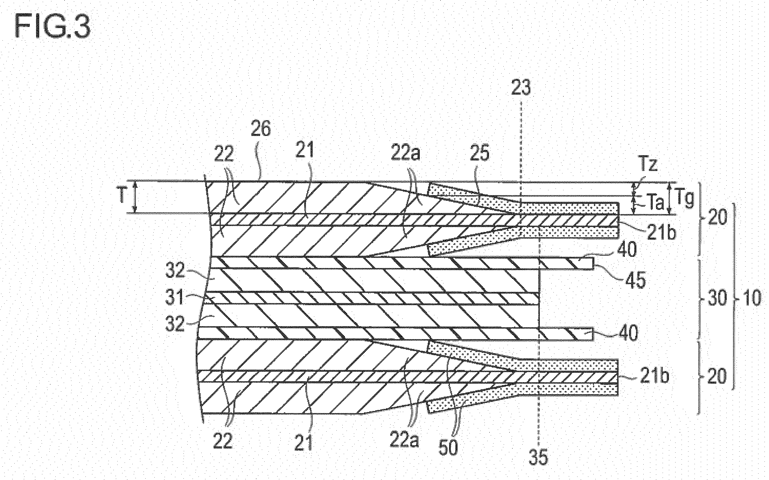

For example, in the embodiment described above, the insulating member 50 extends beyond the end portion 35 of the current collector 31 or the active material layer 32 of the negative electrode 30 in an in-plane direction. However, as illustrated in Fig. 3, the insulating member 50 may extend beyond an end portion 45 of the separator 40 in the in-plane direction. With this structure, as compared with the structure in which the insulating member 50 extends beyond the end portion 35 of the negative electrode 30, occurrence of internal a short circuit can be more reliably prevented.

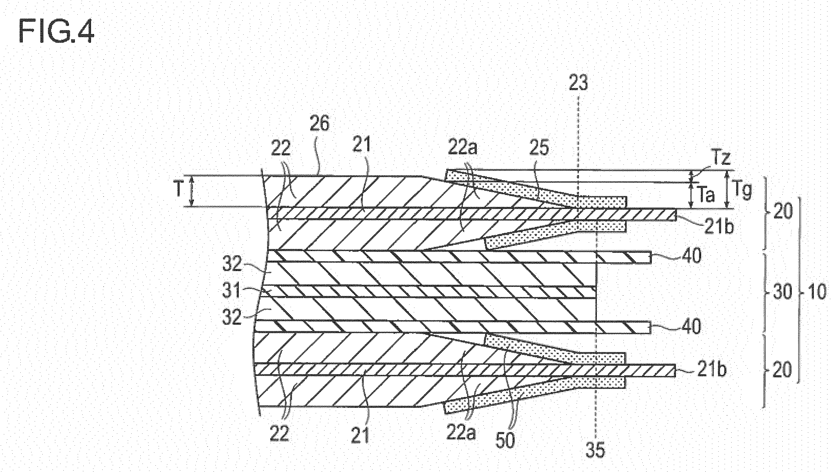

In the embodiment described above, the sum of Tg of the thickness Ta of the end portion 22a of the active material layer 22 covered by the insulating member 50 and the stacking-direction-component Tz of the thickness of the insulating member 50 is less than the thickness T of the active material layer 22 that is not covered by the insulating member 50. However, as illustrated in Fig. 4, as long as the insulating member 50 covers the region from the exposed portion 21b to the inclined portion 25, the sum of Tg of the thickness Ta of the end portion 22a and the stacking-direction-component Tz of the thickness of the insulating member 50 may exceed the thickness T of the active material layer 22.

In the description of the present embodiment, the electrode 10 is the positive electrode 20. However, the structure is not limited to this, and the electrode 10 may be the negative electrode 30. That is, although not illustrated, an insulating member may be disposed so as to cover a region from an exposed portion of the current collector to an inclined portion of the negative electrode.

In the present embodiment, the insulating member 50 is disposed at least at two sides of the boundary portion 23 of the rectangular current collector 21 of the positive electrode 20, one of the sides being connected to the positive electrode tab 24 and the other side facing the one of the sides. However, the structure is not limited to this. For example, the insulating member 50 may be disposed at all sides (the entire periphery) of the boundary portion 23 of the rectangular current collector 21 of the positive electrode 20.

The present application is based on Japanese Patent Application No. 2013-225825, filed on October 30, 2013.

### Reference Signs List

10 electrode
20 positive electrode
21 current collector
21b exposed portion
22 active material layer
22a end portion
23 boundary portion
24 positive electrode tab
25 inclined portion
30 negative electrode
31 current collector
32 active material layer
34 negative electrode tab
35 end portion
40 separator
45 end portion
50 insulating member
70 power generation element
80 casing
90 unit cell layer
100 battery
T thickness of active material layer
Ta thickness of end portion of active material layer
Tg sum of thickness of end portion of active material layer and stacking-direction-component of thickness of insulating member
Tz stacking-direction-component of thickness of insulating member

## Claims

1. A battery comprising: a stacked body (70) in which electrodes (10) are stacked with a separator (40) therebetween; and a casing (80) that seals the stacked body (70),
wherein each of the electrodes (10) includes;
a current collector (21, 31);
an active material layer (22, 32) that is stacked on the current collector (21) so as to form an inclined portion (25) while leaving an exposed portion (21b) at which a part of the current collector (21) is exposed, the inclined portion (25) being inclined in such a way that a thickness thereof decreases toward the exposed portion (21b); and
an insulating member (50) that covers a region from the exposed portion (21b) to the inclined portion (25),
wherein a sum (Tg) of a thickness (Ta) of an end portion (22a) of the active material layer (22) covered by the insulating member (50) and a stacking-direction-component (Tz) of a thickness of the insulating member (50) is less than or equal to a thickness (T) of the active material layer (22) that is not covered by the insulating member (50), **characterized in that**
a ratio of an area of the battery (100) to a rated capacity is 5 cm²/Ah or greater, and the rated capacity is 3 Ah or greater,
wherein the area of the battery (100) is a projected area of the battery (100) including the casing (80), and
wherein an aspect ratio of the active material layer (22), which is defined as a ratio of a long side to a short side of the rectangular active material layer (22), is in a range of 1 to 3.

2. The battery according to Claim 1, wherein the insulating member (50) extends beyond an end portion (35), in an in-plane direction, of the current collector (31) or the active material layer (32) of a pole that is different from a pole of the current collector (31) and the active material layer (22) with which the insulating member (50) covers.

3. The battery according to Claim 1 or 2,
wherein a tab (24) is connected to an end portion of the current collector (21), and
wherein the insulating member (50) is disposed on the active material layer (22) at a side to which the tab (24) is connected.

4. The battery according to any one of Claims 1 to 3, wherein the current collector (21) and the active material layer (22) are for a positive electrode (20).

5. The battery according to Claim 4, wherein the insulating member (50) is disposed at a position that overlaps a region formed by the active material layer (32) of a negative electrode (30) in plan view.

6. The battery according to any one of Claims 1 to 5, wherein the insulating member (50) extends beyond an end portion of a separator (40) in an in-plane direction, the separator (40) being stacked on a side of the active material layer (32) opposite to a side on which the current collector (31) is stacked.

7. The battery according to any one of Claims 1 to 6, wherein the active material layer (22, 32) is shaped like a rectangle and a length of a short side of the rectangle is 100 mm or greater.

## Patentansprüche

1. Batterie, mit: einem Stapelkörper (70), in welchem Elektroden (10) aneinandergereiht sind, wobei ein Separator (40) dazwischen ist; und einem Gehäuse (80), das den Stapelkörper (70) dicht umschließt,
wobei jede der Elektroden (10) aufweist:
einen Stromkollektor (21, 31);
eine Aktivmaterialschicht (22, 32), die auf dem Stromkollektor (21) so gestapelt ist, dass ein geneigter Bereich (25) gebildet ist, wobei ein freigelegter Bereich (21b) verbleibt, in welchem ein Teil des Stromkollektors (21) freiliegt, wobei der geneigte Bereich (25) so geneigt ist, dass seine Dicke in Richtung zu dem freigelegten Bereich (21b) abnimmt; und
ein Isolierelement (50), das ein Gebiet von dem freigelegten Bereich (21b) zu dem geneigten Bereich (25) bedeckt,
wobei eine Summe (Tg) der Dicke (Ta) eines Endbereichs (22a) der Aktivmaterialschicht (22), der von dem isolierenden Element (50) bedeckt ist, und eine Stapelrichtungskomponente (Tz) einer Dicke des isolierenden Elements (50) kleiner oder gleich ist einer Dicke (T) der Aktivmaterialschicht (22), die nicht von dem isolierenden Element (50) bedeckt ist,
**dadurch gekennzeichnet, dass**
ein Verhältnis einer Fläche der Batterie (100) zu einer Nennkapazität 5 cm²/Ah oder größer ist, und die Nennkapazität 3 Ah oder größer ist,
wobei die Fläche der Batterie (100) eine projizierte Fläche der Batterie (100) mit dem Gehäuse (80) ist, und
wobei ein Aspektverhältnis der Aktivmaterialschicht (22), das als ein Verhältnis einer langen Seite zu einer kurzen Seite der rechteckigen Aktivmaterialschicht (22) definiert ist, im Bereich von 1 bis 3 liegt.

2. Batterie nach Anspruch 1, wobei das isolierende Element (50) sich über einen Endbereich (35) in einer ebeneninternen Richtung des Stromkollektors (31) hinaus erstreckt, oder die Aktivmaterialschicht (32) eines Pols, der sich von einem Pol des Stromkollektors (31) und der Aktivmaterialschicht (22), die das isolierende Element (50) bedeckt, unterscheidet.

3. Batterie nach Anspruch 1 oder 2,
wobei ein Streifen (24) an einem Endbereich des Stromkollektors (21) angebracht ist, und
wobei das isolierende Element (50) auf der Aktivmaterialschicht (22) auf einer Seite angeordnet ist, an der der Streifen (24) angebracht ist.

4. Batterie nach einem der Ansprüche 1 bis 3, wobei der Stromkollektor (21) und die Aktivmaterialschicht (22) für eine positive Elektrode (20) vorgesehen sind.

5. Batterie nach Anspruch 4, wobei das isolierende Element (50) an einer Position angeordnet ist, die in der Draufsicht ein Gebiet überlappt, das durch die Aktivmaterialschicht (32) einer negativen Elektrode (30) gebildet ist.

6. Batterie nach einem der Ansprüche 1 bis 5, wobei das isolierende Element (50) sich über einen Endbereich eines Separators (40) in einer ebeneninternen Richtung hinaus erstreckt, wobei der Separator (40) auf einer Seite der Aktivmaterialschicht (32) gegenüberliegend zu einer Seite gestapelt ist, auf der der Stromkollektor (31) gestapelt ist.

7. Batterie nach einem der Ansprüche 1 bis 6, wobei die Aktivmaterialschicht (22, 32) als Rechteck geformt ist und eine Länge einer kurzen Seite des Rechtecks 100 mm oder größer ist.

## Revendications

1. Batterie comprenant: un corps empilé (70) dans lequel des électrodes (10) sont empilées avec un séparateur (40) situé entre elles; et un boîtier (80) qui scelle le corps empilé (70),
dans lequel chacune des électrodes (10) comprend:
un collecteur de courant (21, 31);
une couche de matériau actif (22, 32) qui est empilée sur le collecteur de courant (21) de manière à former une partie inclinée (25) tout en laissant une partie exposée (21b) à laquelle une partie du collecteur de courant (21) est exposée, la partie inclinée (25) étant inclinée pour qu'une épaisseur de celle-ci diminue vers la partie exposée (21b); et
un élément isolant (50) qui couvre une zone allant de la partie exposée (21b) à la partie inclinée (25),
dans lequel une somme (Tg) d'une épaisseur (Ta) d'une partie d'extrémité (22a) de la couche de matière actif (22) recouverte par l'élément isolant (50) et d'une composante de direction d'empilement (Tz) d'une épaisseur du l'élément isolant (50) est inférieure ou égale à une épaisseur (T) de la couche de matériau actif (22) qui n'est pas recouverte par l'élément isolant (50),
**caractérisé en ce que**
un rapport entre la superficie de la batterie (100) et la capacité nominale est de 5 cm²/Ah ou plus, et la capacité nominale est de 3 Ah ou plus,
dans lequel la superficie de la batterie (100) est une superficie projetée de la batterie (100) comprenant le boîtier (80), et
dans lequel un rapport d'aspect de la couche de matériau actif (22), qui est défini comme un rapport entre un côté long et un côté court de la couche de matériau actif rectangulaire (22), se situe dans une plage de 1 à 3.

2. Batterie selon la revendication 1, dans laquelle l'élément isolant (50) s'étend au-delà d'une partie d'extrémité (35) dans le sens du plan du collecteur de courant (31) ou de la couche de matériau actif (32) d'un pôle différent à partir d'un pôle du collecteur de courant (31) et la couche de matériau actif (22) avec laquelle recouvre l'élément isolant (50).

3. Batterie selon la revendication 1 ou la revendication 2,
dans lequel une languette (24) est connectée à une partie d'extrémité du collecteur de courant (21), et
dans lequel l'élément isolant (50) est disposé sur la couche de matériau actif (22) sur un côté auquel la languette (24) est connectée.

4. Batterie selon l'une quelconque des revendications 1 à 3, dans laquelle le collecteur de courant (21) et la couche de matière actif (22) sont destinés à une électrode positive (20).

5. Batterie selon la revendication 4, dans laquelle l'élément isolant (50) est disposé à une position qui recouvre une zone formée par la couche de matériau actif (32) d'une électrode négative (30) en vue en plan.

6. Batterie selon l'une quelconque des revendications 1 à 5, dans laquelle l'élément isolant (50) s'étend au-delà d'une partie d'extrémité d'un séparateur (40) dans une direction dans le plan, le séparateur (40) étant empilé sur un côté de la couche de matériau actif (32) opposé à un côté sur lequel le collecteur de courant (31) est empilé.

7. Batterie selon l'une quelconque des revendications 1 à 6, dans laquelle la couche de matériau actif (22, 32) est en forme de rectangle et la longueur d'un petit côté du rectangle est de 100 mm ou plus.
